(19) Europäisches Patentamt
European Patent Office
Office européen des brevets

(11) **EP 3 111 583 B1**

(12) **EUROPEAN PATENT SPECIFICATION**

(45) Date of publication and mention
of the grant of the patent:
**12.10.2022 Bulletin 2022/41**

(21) Application number: **15706232.4**

(22) Date of filing: **24.02.2015**

(51) International Patent Classification (IPC):
*H04L 5/06* (2006.01)      *H04L 27/34* (2006.01)

(52) Cooperative Patent Classification (CPC):
**H04L 5/06;** H04L 27/34

(86) International application number:
**PCT/EP2015/053812**

(87) International publication number:
**WO 2015/124793 (27.08.2015 Gazette 2015/34)**

(54) **METHOD AND APPARATUS FOR HIGH DATA RATE COMMUNICATION**

VERFAHREN UND VORRICHTUNG FÜR KOMMUNIKATION MIT HOHER DATENRATE

PROCÉDÉ ET APPAREIL DESTINÉS À UNE COMMUNICATION À HAUT DÉBIT DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2014 EP 14156317**

(43) Date of publication of application:
**04.01.2017 Bulletin 2017/01**

(73) Proprietor: **Xilinx, Inc.
San Jose, California 95124 (US)**

(72) Inventor: **AUE, Volker
01099 Dresden (DE)**

(74) Representative: **Lippert Stachow Patentanwälte
Rechtsanwälte
Partnerschaft mbB
Krenkelstraße 3
01309 Dresden (DE)**

(56) References cited:
**WO-A1-00/42727    US-A1- 2010 091 688**

**Description**

The increasing demand for wireless capacity requires the deployment of new cells for mobile cellular communication. Distributed base station architectures place the antennas and radios remotely from the base station. In distributed base station architecture, the radio is typically placed close to the antenna or even integrated with the antenna. Radio and base station are connected via an optical cable. A further cellular architecture is so-called centralized radio architecture network (C-RAN) in which multiple base stations are co-located and the radios and antennas are placed in remote locations. As opposed to the backhaul that connects a base station with the core network, the connection of a remote antenna to the base station is typically referred to as the fronthaul.

However, it is not always possible to place the cables or fibers where wanted. In some cases, building regulations do not permit burying new cables. In this case, microwave links can be an alternative.

If multiple frequencies are to be served, the data rates that need to be delivered over the fronthaul goes beyond 5 Gbit/s.

Those data rates and regulatory permissions that limit channel bandwidths to 2 GHz or 2.5 GHz e.g. in the 60 GHz domain create the demand for modems that use higher order modulation with high data rates. In order to accommodate the data rate, a high signal-to-noise-ratio (SNR) is required. Conventional modem architectures use a set of high speed analog-to-digital converters (ADCs) in order to receive wideband signals with bandwidths greater than 2.5 GHz. Likewise, a set of digital-to-analog converters (DACs) is used to generate wideband signals with bandwidths greater than 2.5 GHz. Possible modulation schemes for the actual data modulation can be single carrier modulation or multicarrier modulation such as Orthogonal Frequency Division Multiplexing (OFDM). In WO 00/42727 A1 an optical communication network utilizing frequency division multiplexing is disclosed.

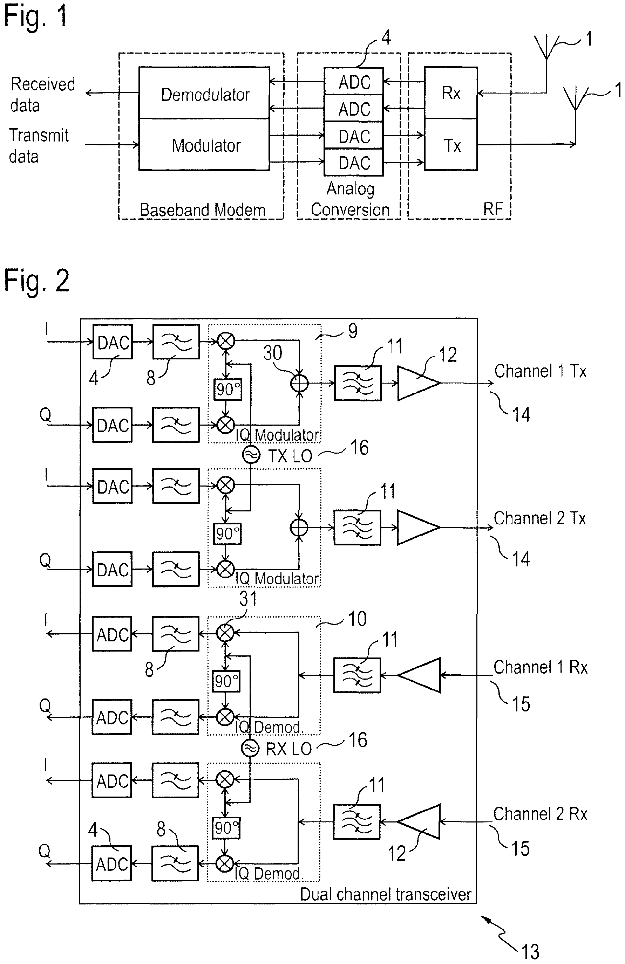

Figure 1 shows the block diagram of a conventional modem for high data rate wireless communications according to the prior art. It consists of a wideband digital baseband modem, converters that convert from analog to digital and vice versa, an RF transmitter (Tx), and an RF receiver (Rx). The RF transmitter and RF receiver are sometimes realized as a combination in which they share some circuits. Such a combined transmitter and receiver is typically referred to as a transceiver.

The drawback of the conventional architecture for highest data rate is that analog to digital converters are expensive and that data rates at the baseband modem need to be processed with high frequencies making it challenging for implementation in field programmable gate arrays (FPGAs).

The architecture disclosed in this invention overcomes the need for highly expensive analog-to-digital converters. The wideband modem functionality is made by a set of modems of narrower bandwidth that are as such easier to be implemented.

It is also known that the need for smaller cells has fostered the development of integrated circuits for realizing complete base stations at lower cost than conventional base stations. Integrated transceivers are now being offered that can span several MHz bandwidth, cover a frequency range from 100 MHz to 3.6 GHz, and have support for multiple-input multiple output (MIMO) transceivers, i.e. those transceivers have the capabilities to support multiple transmit and receive antennas.

MIMO (multiple input, multiple output) is an antenna technology for wireless communications in which multiple antennas are used at both the source (transmitter) and the destination (receiver). The antennas at each end of the communications circuit are combined to minimize errors and optimize data speed. MIMO is one of several forms of smart antenna technology, the others being MISO (multiple input, single output) and SIMO (single input, multiple output).

In conventional wireless communications, a single antenna is used at the source, and another single antenna is used at the destination. In some cases, this gives rise to problems with multipath effects. When an electromagnetic field is met with obstructions such as hills, canyons, buildings, and utility wires, the wavefronts are scattered, and thus they take many paths to reach the destination. The late arrival of scattered portions of the signal causes problems such as fading, cut-out (cliff effect), and intermittent reception (picket fencing). In digital communications systems, it can cause a reduction in data speed and an increase in the number of errors. The use of two or more antennas, along with the transmission of multiple signals (one for each antenna) at the source and the destination, eliminates the trouble caused by multipath wave propagation, and can even take advantage of this effect.

Figure 2 shows the block diagram of a MIMO transceiver according to the prior art. The two-by-two MIMO transceiver or dual or two channel transceiver provides two transmit and two receive paths, respectively. Each transmit path has a pair of digital-to-analog converters (DACs), a pair of low pass filters, a vector modulator also referred to as an IQ modulator, an additional band pass filter and an amplifier. The mixer frequency is generated by one oscillator that is shared between both transmit paths.

Likewise, an additional oscillator supplies the receive paths with the mixing frequency. For each receive path, the received signal is first amplified using a low noise amplifier (LNA) and then band pass filtered. The band pass filtered signal is then presented to an IQ demodulator that down converts the received signal to baseband. The baseband components are then low pass filtered and converted to digital by analog-to-digital converters (ADCs).

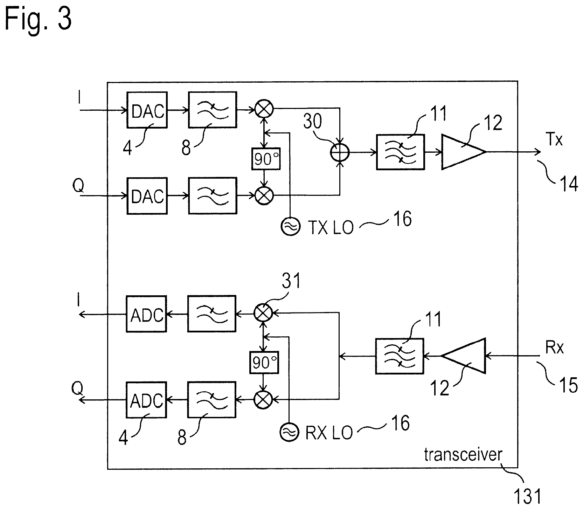

Figure 3 shows a single channel direct conversion transceiver block diagram with ADCs (analogue to digital converters) and DACs (digital to analogue converters) according to the prior art. In comparison to the two channel transceiver mentioned in figure 2, only one transmit path and one receive path are provided. The signal processing is the same as for a two channel transceiver. In the Tx path, the in-phase and quadrature signals are first digital to analog converted and the outputs are low pass filtered. The signals are then mixed with the locally generated carrier frequency and a 90 degrees shifted version thereof. Both mixed signals are then added, band-pass filtered and amplified to generate the output signal.

Likewise, at the receive side, the received signal is first amplified and band-pass filtered. The band-pass filtered signal is then mixed down by a multiplication with a locally generated frequency to form the in-phase signal. The same signal is mixed down by a multiplication with a 90 degree shifted version to form the quadrature signal. Both in-phase and quadrature signals are then low pass filtered and analog to digital converted.

Previously used ADCs or DACs of the state of the art receive or generate wideband signals with bandwidths greater than 2.5 GHz, but those converters are very expensive. Those data rates and regulatory permissions that limit channel bandwidths to 2 GHz or 2.5 GHz in the 60 GHz domain create the demand for modems that use higher order modulation with higher data rates at moderate costs.

Furthermore, it will be adversely as well, if the fronthaul, e.g. air, is disturbed, because if the spectrum at e.g. 1 GHz is modulated to 60 GHz parts of the spectrum for example at 59 GHz or 61 GHz will be attenuated. This will cause problems at the receiver side, because distortions of the transmitted signal lead to crosstalk between the I and Q signal parts, so that the transmitted signal cannot be restored in the correct way. Distortions can be result from phase noise, respectively.

It is therefore the object of the invention to replace expensive converters with simple means and at low cost in order to provide a solution for wireless fronthaul that allows a bidirectional wireless transmission of wideband signals, e.g. 10 Gbps digital IQ data according to the CPRI protocol, whereas the solution shall be flexible to allow also wireless transmission of smaller data rates of higher and lower ranges with a very low bill of material at the same time.

It is also an object of the invention to operate in the 60 GHz ISM band (Industrial, Scientific and Medical band) to avoid license cost.

Another object of the invention is to bridge an outdoor line-of-sight distance of 200 m, whereas the latency shall be below 100 μs with a jitter less than 1 μs to fulfill the remote radio unit serial high speed link requirements.

The object of the invention will be solved thereby that the IF modem comprises a two channel modulator, a two channel demodulator and a two channel IF transceiver and a transformation module is preceding each IF modem, wherein the IF modem and the RF-front end unit forming a double conversion architecture.

The benefit of the aforementioned usage of a plurality of intermediate frequency modems is that every IF modem uses a different intermediate frequency. Each IF modem generates one band limited signal at an individual IF frequency. Through combination of the individual spectra generated by each IF modem a wideband signal is synthesized. Expensive broadband AD- or DA-converters can be avoided by this architecture. In fact, IF modems with a smaller bandwidth are sufficient to synthesize a wideband signal at carrier frequency of 60 GHz.

The first IF channel is presented to the in-phase input of the RF transceiver whereas the second IF channel is presented to the quadrature input of the RF transceiver. In receive direction, the receive signal is down converted by the RF transceiver to analog baseband. The analog baseband signal is treated as an IF signal by the transceivers. The in-phase component of the analog baseband signal is further presented to the first IF receiver and then mixed to baseband where the signal is sampled. Likewise, the quadrature component of the analog baseband signal is further presented to the second IF receiver and then mixed to baseband where the signal is sampled. It is important that all oscillators in one modem are coupled to a common reference frequency generator. This advantageous double conversion architecture is used to synthesize a wideband baseband signal using multiple MIMO transceivers.

In another embodiment of the present apparatus the IF modems form a bank of modulators and demodulators. This is an advantage due to the extremely high parallelism which results in a wideband signal processing. Therefor it is necessary that all clocks and oscillators in particular the oscillators used to clock the converters in the transceivers, and the oscillators to drive the mixer in the transceivers are synchronized to one common clock reference.

The transformation module is preceding each IF modem for a further increase of the signal performance. One may assume the following transformation scheme:

$$x_i^T(t) = \frac{1}{2} x_1(t) + \frac{1}{2} x_3(t)$$

$$x_q^T(t) = \frac{1}{2} x_2(t) - \frac{1}{2} x_4(t)$$

$$y_i^T(t) = \frac{1}{2} x_2(t) + \frac{1}{2} x_4(t)$$

$$y_q^T(t) = \frac{1}{2}x_3(t) - \frac{1}{2}x_1(t)$$

for up-conversion. Two individual IF modems are used that are phase locked to one another and where one IF modem up-converts a pair of signals x1(t) and x2(t) to a frequency fRF + fIF whereas the other IF modem up-converts the pair of input signals x3(t) and x4(t) to a frequency fRF - fIF.

Using the transformation given by the equations above, the signals x1(t) to x4(t) can be mapped onto the two channel transceiver architecture to produce an identical output signal.

Let xiR, xqR, yiR, and yqR denote the received in-phase and quadrature components of the first IF modem x and the second IF modem y of a double down-conversion receiver, respectively. Then, the estimated output signals $\tilde{x}_{1(t)}... \tilde{x}_{4(t)}$ can be computed using the following set of equations:

$$\tilde{x}_1(t) = \frac{1}{2}x_i^R(t) - \frac{1}{2}y_q^R(t)$$

$$\tilde{x}_2(t) = \frac{1}{2}x_q^R(t) - \frac{1}{2}y_i^R(t)$$

$$\tilde{x}_3(t) = \frac{1}{2}y_q^R(t) + \frac{1}{2}x_i^R(t)$$

$$\tilde{x}_4(t) = \frac{1}{2}y_i^R(t) - \frac{1}{2}x_q^R(t)$$

Since this is an architecture equivalent to two single conversion receivers working independently from one another, any phase offset occurring at RF can be compensated at baseband for each pair $(\tilde{x}_1(t),\tilde{x}_2(t))$, $(\tilde{x}_3(t),\tilde{x}_4(t))$ from one another, e.g., by treating them as a complex signal.

The RF-front end unit of the apparatus for high data rate communication comprises a transceiver that is connected to the antenna.

As mentioned above, it is advantageously that a reference control unit is connected to the IF modems and the RF-front end unit.

The object of the invention will be solved also by a method in such a way that

- in transmitting direction:

- one transmitting high speed signal is split into subsignals,

- every subsignal is provided to one IF modem,

- the subsignal is modulated,

- the subsignal is up-converted to an intermediate frequency,

- the up-converted subsignals of every IF modem are combined and forming a frequency multiplexed in-phase signal and a frequency multiplexed quadrature signal,

- the in-phase signal and the quadrature signal are up-converted to radio frequency, and

- in receiving direction:

- the receiving signal is down-converted to baseband,

- an in-phase signal and a quadrature signal are formed,

- the in-phase signal and the quadrature signal are split in in-phase subsignals and in quadrature subsignals,

- the subsignals are presented to the multiple IF modems,

- every in-phase and quadrature subsignal are down-converted by one IF modem,

- the subsignals are demodulated, and

- the demodulated subsignals are multiplexed to one high speed signal, wherein two channels of a two channel transceiver of the IF modem are modulating on the same IF frequency and a phase relationship between the two channels is fixed and known to the IF modem, and wherein

- in transmitting direction every subsignal is transformed by a transformation module over a transformation matrix to a sideband of the radio frequency fRF, particularly to fRF-fIF and/or fRF+fIF, respectively before it is modulated and directed to the two channel transceiver, wherein the transformation ma-

$$x_i^T(t) = \frac{1}{2}x_1(t) + \frac{1}{2}x_3(t)$$

$$x_q^T(t) = \frac{1}{2}x_2(t) - \frac{1}{2}x_4(t)$$

$$y_i^T(t) = \frac{1}{2}x_2(t) + \frac{1}{2}x_4(t)$$

trix has the form $\quad y_q^T(t) = \frac{1}{2}x_3(t) - \frac{1}{2}x_1(t)$,

with $x_i^T$, $y_i^T$ are in-phase and , $x_q^T$, $y_q^T$ are quadrature output signals in transmit direction;

- in receiving direction after the received signal was down-converted and demodulating by the IF modem the subsignals are transformed back by the transformation module over a transformation matrix, wherein the transformation matrix has the form

$$\widetilde{x}_1(t) = \frac{1}{2} x_i^R(t) - \frac{1}{2} y_q^R(t)$$

$$\widetilde{x}_2(t) = \frac{1}{2} x_q^R(t) - \frac{1}{2} y_i^R(t)$$

$$\widetilde{x}_3(t) = \frac{1}{2} y_q^R(t) + \frac{1}{2} x_i^R(t)$$

$$\widetilde{x}_4(t) = \frac{1}{2} y_i^R(t) - \frac{1}{2} x_q^R(t)$$

with $x_i^R$, $y_i^R$, are received in-phase and $x_q^R$, $y_q^R$ received quadrature signals and $\widetilde{x}_{1(t)}...\widetilde{x}_{4(t)}$ are estimated output signals in receive direction.

Performing the method every IF modem uses a different intermediate frequency forming an individual spectrum.

Through the two channels of a two channel transceiver of the IF modem that are modulating on the same IF frequency and a fixed phase relationship between the two channels which is known to the IF modem, the signals are entirely known to each other and differences can be neglected.

Using a transformation module and therewith a signal transformation mainly overcome the challenge of an asymmetric characteristic of the transmission channel, because the characteristic of that channel can be to some extend frequency selective but asymmetric. Therefor a transformation for each IF transceiver is used that converts a double-sided spectrum that is generated by the two channels of a two channel modem into two single sided spectra fRF-fIF and/or fRF+fIF, respectively.

In a further embodiment of the present invention the individual spectra are provided with a bandwidth of at least 100 MHz.

For high bandwidths it is expected that the transmission chain is not entirely flat. Known from the state of the art some transceiver provides only guarantees 2 dB flatness over a 1 GHz IF bandwidth that is corresponding to 2 GHz RF bandwidth. However, using IF modems that process the received signal in chunks of 100 MHz, the flatness can be compensated for each 100 MHz wide signal.

In another further embodiment of the present invention the plurality of IF modems generate a wide band signal by combining the individual spectra generated by each IF modem.

With several individual spectra of less bandwidth and less added impairments a wide band signal can be generated without expensive converters at moderate costs.

In another embodiment of the present invention a digital compensation is done offline before and after transmission or reception, where compensation values are estimated.

And furthermore, a calibration of the transmitted and received signal is performed.

Therefor the calibration is performed in transmit direction for each two channel modem by estimating the phase and gain of the IF modem's first channel modulator and the phase and gain of the IF modem's second modulator and rotating and scaling the baseband input signal after transformation such that the measured differences are compensated for the imbalances of the I and Q branches in transmit direction. In receive direction the calibration for each two channel modem is performed by estimating the phase and gain of the IF modem's first channel demodulator and the phase and gain of the IF modem's second demodulator and rotating and scaling the baseband output signal before reverse transformation such that the measured difference is compensated for the imbalances of the I and Q branches in receive direction.

This is necessary, because of differences between each IF modem and their transceivers due to fabrication and performance tolerances, the length of signal paths and so on.

The present invention will be illustrated by means of embodiments. The corresponding drawings show

Fig. 1 a block diagram of a conventional modem for high data rate wireless communications (state of the art);

Fig. 2 a block diagram of a MIMO transceiver or two channel transceiver (state of the art);

Fig. 3 a single channel direct conversion transceiver block diagram with ADCs and DACs (state of the art);

Fig. 4 a) a conceptual block diagram emphasizing the data flow of the millimeter wave modems, and b) a more detailed view of the high data rate communication apparatus with peripheral components;

Fig. 5 an IF modem based on two channel transceiver (MIMO transceiver);

Fig. 6 a conceptual drawing of the wideband signal synthesis;

Fig. 7 a spectrum at carrier frequency;

Fig. 8 a conceptual block diagram of double conversion transmitter architecture, with transmitting and receiving direction; and

Fig. 9 a conceptual block diagram of a double conversion transmitter architecture for transmitting direction respectively, with

a) double conversion transmitter architecture,

b) transmitter with transformation matrix,

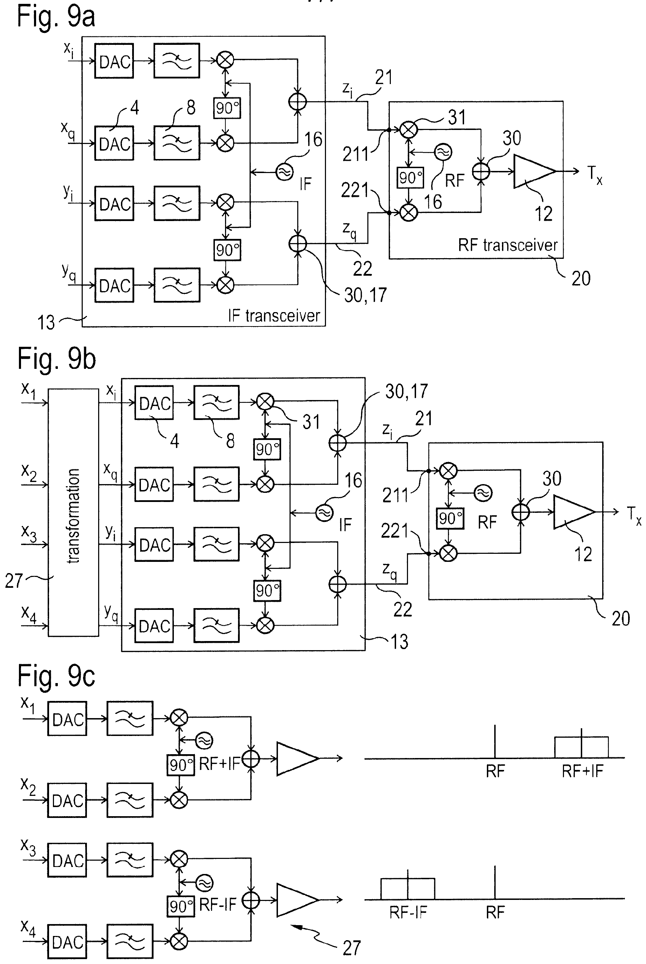

c) conceptual block diagram of the equivalent transmitter pair that exhibits the same functionality as the transmitter shown in Fig. 9b.

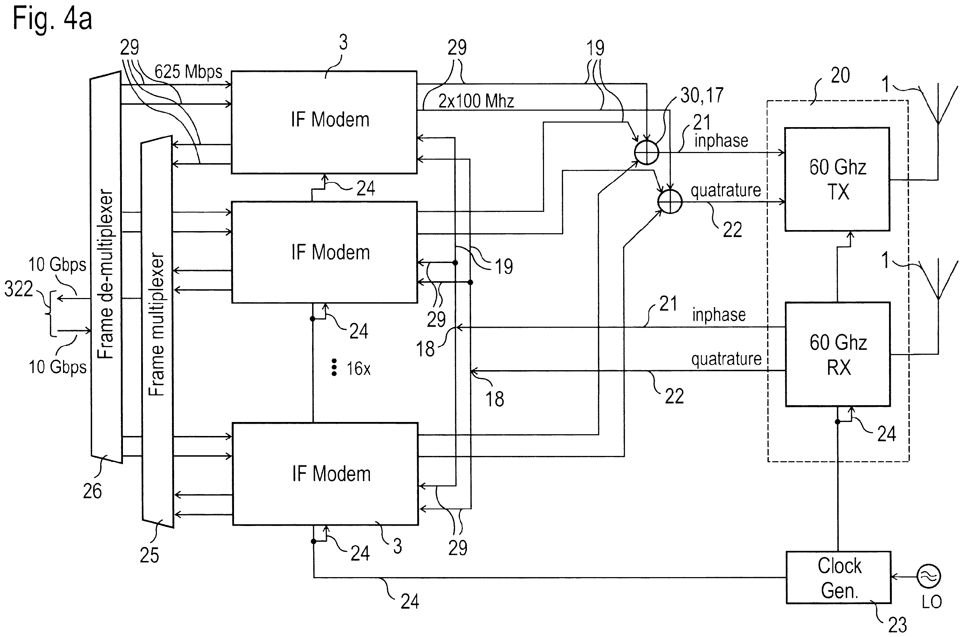

Fig. 4a shows a conceptual block diagram emphasizing the data flow of the millimeter wave modems of the invention.

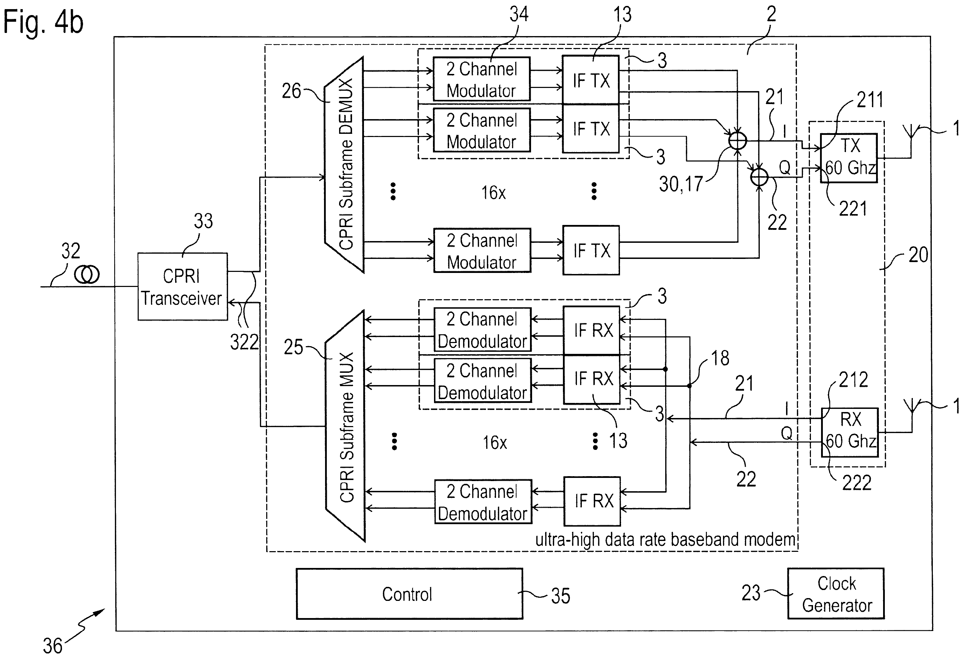

Figure 4b shows a more detailed view and likewise overview of the high data rate communication apparatus with peripheral components.

The main building blocks are the optical transceiver 33 that converts an electrical signal to optical and vice versa. It also makes the connection to the optical fiber 32. The serial high speed link is responsible for connecting the high data rate communication apparatus using an optical transceiver 33 to an optical cable. It is responsible for recovering the clock that is transmitted via the serial link when using in a clock slave mode, or generating the clock when using in a clock master mode. The subframe demultiplexer 26 deserializes any received data and distributes the data to the two channel IF modems 3. The subframe multiplexer 25 collects the data received from all IF modems 3 and assembles the containers for the serial interface. Each two channel IF modem 3 modulates two substreams to two single sideband IFs (intermediate frequencies), respectively. It also demodulates the received signals from two single sideband IFs and provides the demodulated data to the multiplexer 25. The combiner 17 combines all IF signals that belong to the inphase component 21 and it combines all IF signals that belong to the quadrature component 22. The RF-front end unit 20 comprises a 60 GHz transmitter that up-converts the analog inphase and quadrature signal to passband. The transmitter also contains a 60 GHz variable gain amplifier (VGA) that amplifies the signal. The RF-front end unit 20 also comprises a 60 GHz receiver that amplifies the received signal using a low noise amplifier, then down-converts the received signal using an inphase/quadrature mixer and provides the inphase and quadratures signals to its outputs.

The splitter 18 takes the received signal and provides the received signal to all two channel IF modems 3. And last but not least the duplexer forwards the transmit signal from the transmitter to the antenna while forwarding the receive signal from the antenna to the receiver. The duplexer is not shown in fig. 4a and 4b. For clarity and illustration purposes the duplexer is not shown in figures 4a and 4b.

Describing the functionality in figures 4a and 4b: data arrives to the high data rate communication unit through the optical fiber 32 and reaches a CPRI transceiver 33. The transceiver 33 performs the optical to electrical conversion and vice versa. For a 10 Gbps signal, the CPRI demultiplexer 26 splits the signal into 32 subsignals on a subframe per subframe basis. A pair of two subframes is delivered to a two channel modulator of an IF modem 3. A frame or subframe structure is used to allocate and assign resources for example to different users. This is used in the LTE standard for example.

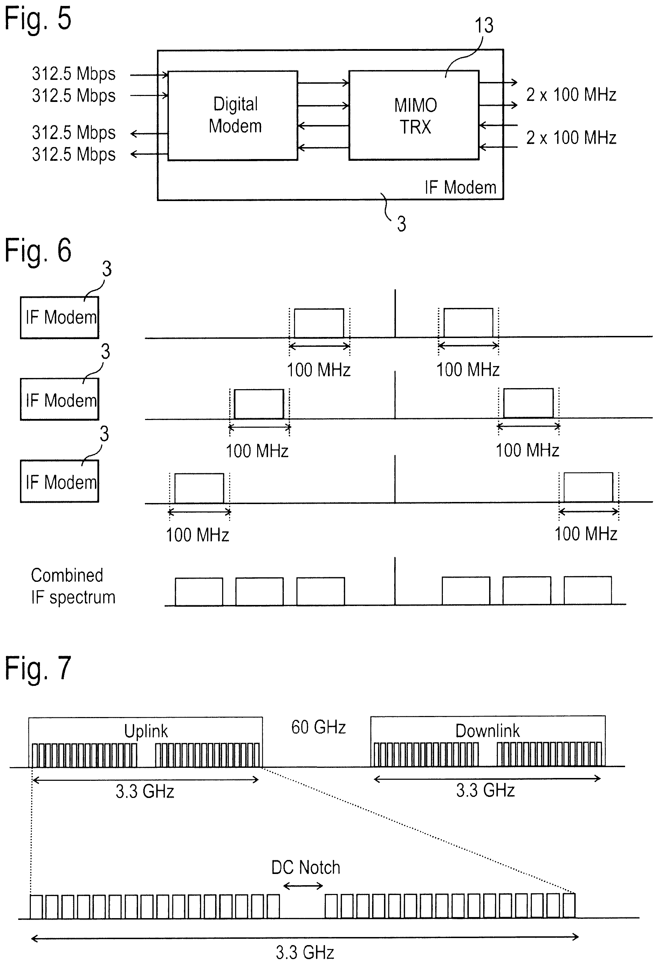

The two channel IF modem 3 modulates each signal. Figure 5 shows a single IF modem 3, respectively. The modulated signals are then up-converted to an intermediate frequency by using a two channel transceiver 13 (MIMO transceiver). For each two channel modulator 34 the output signals are mixed to the same intermediate frequency (IF). However, different two channel modulators 34 use different frequencies.

The outputs of every first output of each IF modem 3 are combined to form a frequency multiplex signal that is then presented to the in-phase component input of a 60 GHz transceiver. Likewise, the outputs of every second output of each IF transceiver 13 are combined to form a frequency multiplex signal that is then presented to the quadrature component input of a 60 GHz transceiver 20. The 60 GHz transceiver 20 then up-converts the signal to transmit radio frequency (RF).

Likewise, on the receive side, a 60 GHz transceiver 20 down-converts the received signal from RF to baseband that is treated by the transceivers as IF. The received frequency multiplex that is present on each inphase 21 and quadrature channel 22 is then split to be presented to multiple IF modems 3. Each IF modem 3 down-converts one signal out of the frequency multiplex for both in-phase and quadrature component, respectively. Each down converted signal is then individually demodulated. The subframes demodulated by each demodulator are then presented to the CPRI multiplexer 25 to be multiplexed to one serial high speed signal 32.

Due to the massive parallelism, the bank of modulators and demodulators can be operated with moderate clock rates and therefore can be mapped to standard FPGAs. The bank of modulators, demodulators, IF transceivers 13, combiner and splitter essentially assemble the functionality of an ultrahigh data rate baseband modem at moderate cost. This is indicated by the dashed box in figure 4b.

The data flow is controlled by one micro controller 35 present in each high data rate communication apparatus. The controller is responsible for controlling the setup phase of the system. It is assisting a technician adjusting the antennas, initializing the system after boot, switching between signal acquisition and normal operation, collecting diagnostic information and various control algorithms that are more suitable for a micro controller 35 than for hardware.

As one can see in figures 4a and 4b, the modem part 2 consists of several IF modems 3 that modulate and up-convert a fraction of the 10 Gbps stream to a dedicated intermediate frequency (IF) and demodulate a received signal from a dedicated IF as mentioned above.

By combining the multiple IF signals, a wideband signal is formed that could otherwise only be generated using multiple expensive ADCs and DACs. In order to form a wideband baseband signal, two of those wideband signals are used. This wideband baseband signal is then up-converted to transmit frequency using a 60 GHz transceiver. Likewise, a 60 GHz transceiver is used to down-convert a wideband received signal to baseband.

The optical transceiver 33 as mentioned above uses the so-called CPRI-protocol. The Common Public Radio Interface (CPRI) is an initiative to define a publicly available specification that standardizes the protocol interface between the radio equipment control (REC) and the radio equipment (RE) in wireless base stations. This allows interoperability of equipment from different vendors, and preserves the software investment made by wireless service providers.

CPRI allows the use of a distributed architecture where basestations, containing the REC, are connected to remote radio heads via lossless fiber links that carry the CPRI data. A unit containing both the transceiver as well as the power amplifier is typically referred to as a remote radio head (RRH). The RRH also includes filters, diplexers and low noise amplifiers for the receiver, also referred to as RF front end unit. This architecture reduces costs for service providers because only the remote radio heads containing the RE need to be situated in environmentally challenging locations. The basestations can be centrally located in less challenging locations where footprint, climate, and availability of power are more easily managed.

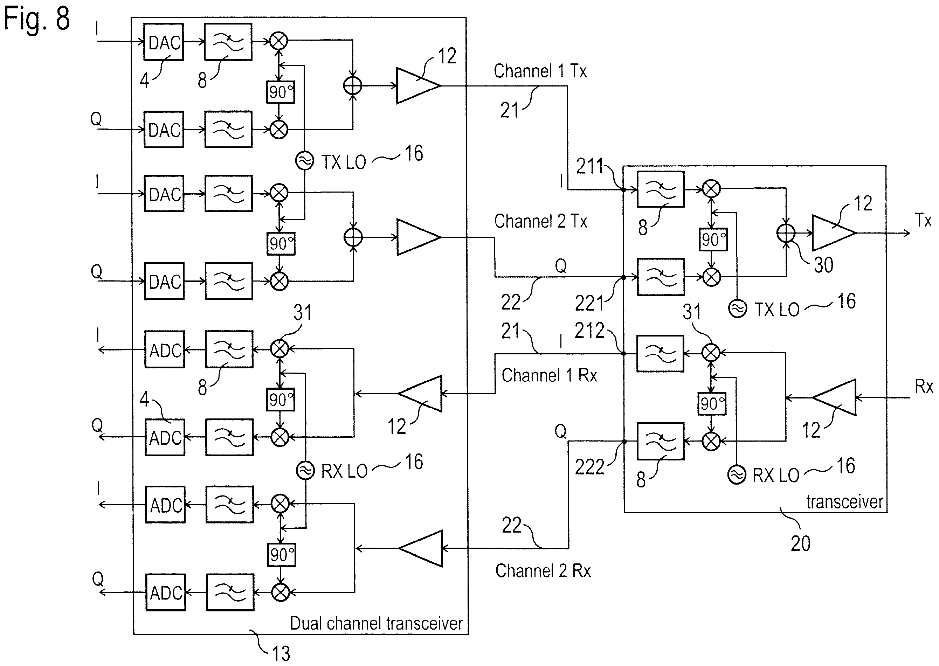

Figure 6 shows as an example using three IF modems 3, how a wideband signal is synthesized through combination of the individual spectra generated by each IF modem 3. Each IF modem 3 generates one band limited signal at some IF frequency. Since the signal is a real signal, the mirror is generated as well. For each portion of a spectrum, essentially three transceivers are used for converting from narrowband baseband to RF, and two conversion stages are involved: Two transceivers convert from narrowband baseband to IF for the in-phase and quadrature components, and one transceiver to convert from that IF treated as wideband baseband to RF and vice-versa. In the following description this architecture is referred to as double conversion architecture. The double conversion architecture as described is shown in figure 8 for a single IF modem.

So far, figure 7 shows the synthesized spectrum at carrier frequency after up-conversion. For a full duplex operation, uplink and downlink signal can be placed next to one another with some duplex spacing.

Figure 8 shows the double conversion architecture according to the present invention. A two channel transceiver 13 is used to up-convert two I/Q signals to IF, respectively. The first IF channel is presented to the in-phase input 211 of the RF transceiver 20 whereas the second IF channel is presented to the quadrature input 221 of the RF transceiver 20. In receive direction, the receive signal is down converted by the RF transceiver to analog baseband. The analog baseband signal is treated as an IF signal by the transceivers. The in-phase component of the analog baseband signal is further presented to the first IF receiver and then mixed to baseband where the signal is sampled. Likewise, the quadrature component of the analog baseband signal is further presented to the second IF receiver and then mixed to baseband where the signal is sampled. Note that in the target architecture, all oscillators in one modem are coupled to a common reference frequency generator 23.

The double conversion architecture is used to synthesize a wideband baseband signal using multiple MIMO transceivers 13.

The signal transformation algorithm which is used for the double conversation architecture will be described in more detail referring to figure 9. Figure 9a shows a conceptual block diagram of a double conversion transmitter architecture for transmitting direction.

For up-conversion two individual modems are used that are phase locked to one another and where one modem up-converts a pair of signals x1(t) and x2(t) to a frequency fRF+IF whereas the other modem up-converts the pair of input signals x3(t) and x4(t) to a frequency fRF-IF (figure 9c).

Figure 9b shows the conceptual block diagram of a double conversion transmitter architecture for transmitting direction of figure 9a with a transformation module 27 that realizes the signal transformation that is shown in more detail in figure 9c.

Using the transformation given by the equations:

$$x_i^T(t) = \frac{1}{2}x_1(t) + \frac{1}{2}x_3(t)$$

$$x_q^T(t) = \frac{1}{2}x_2(t) - \frac{1}{2}x_4(t)$$

$$y_i^T(t) = \frac{1}{2}x_2(t) + \frac{1}{2}x_4(t)$$

$$y_q^T(t) = \frac{1}{2}x_3(t) - \frac{1}{2}x_1(t)$$

for up-conversion, the signals x1(t) to x4(t) can be mapped onto the two channel transceiver architecture to produce anidentical output signal.

**List of reference symbols**

| | |
|---|---|
| 1 | antenna |
| 2 | modem unit |
| 3 | IF modem |
| 4 | converter |
| 5 | RF transmitter (Tx) |
| 6 | RF receiver (Rx) |
| 7 | transceiver (TRx) |
| 8 | low-pass filter |
| 9 | vector modulator or IQ modulator |
| 10 | vector demodulator or IQ demodulator |
| 11 | band pass filter |
| 12 | amplifier |
| 13 | two channel transceiver or MIMO transceiver |
| 131 | single channel transceiver |
| 14 | transmit path |
| 15 | receive path |
| 16 | oscillator |
| 17 | combiner or adder |
| 18 | splitter |
| 19 | signal channel |
| 20 | RF front end unit, RF transceiver |
| 21 | in-phase signal line |
| 211 | in-phase signal input |
| 212 | in-phase signal output |
| 22 | quadrature signal line |
| 221 | quadrature signal input |
| 222 | quadrature signal output |
| 23 | clock generator |
| 24 | clock reference |
| 25 | frame or subframe multiplexer |
| 26 | frame or subframe demultiplexer |
| 27 | transformation module |
| 28 | signal |
| 29 | subsignal |
| 31 | multiplication |
| 32 | serial high speed link connecting an optical fiber |
| 322 | high speed signal |
| 33 | optical transceiver |
| 34 | two channel modulator |
| 35 | micro controller |
| 36 | high data rate communication unit |
| I | in-phase signal |
| Q | quadrature signal |

**Claims**

1. An apparatus for high data rate communication (36) comprising

- at least a signal de-multiplexer (25) and a signal multiplexer (26) wherein the signal de-multiplexer (25) and the signal multiplexer (26) connected to a modem unit via signal lines;
- a reference control unit;
- an antenna (1), wherein
- the modem unit (2) comprises a plurality of intermediate frequency (IF) modems (3);
- combiners (17) and splitters (18), wherein the combiners (17) and the splitters (18) are connected via signal channels (19) to the plurality of IF modems (3);
- and a RF-front end unit (20), wherein the combiners (17) and the splitters (18) are connected via an inphase signal line (21) and a quadrature signal line (22) to the RF-front end unit (20), **characterized in that** the IF modem comprises a two channel modulator, a two channel demodulator and a two channel IF transceiver (13) with a fixed phase relationship between the two channels and a transformation module (27) is preceding each IF modem (3), wherein the IF modem and the RF-front end unit (20) form a double conversion architecture.

2. The apparatus according to claim 1, comprising that the IF modems (3) forming a bank of modulators and demodulators.

3. The apparatus according to one of the foregoing claims, comprising that the RF-front end unit (20) comprises a transceiver that is connected to the antenna (1).

4. The apparatus according to one of the foregoing claims, comprising that a reference control unit (23) is connected to the IF modems (3) and the RF-front end unit (20) .

5. A method for providing intermediate frequency (IF) modems (3) of a modem unit (2) with a high data rate signal in the GHz range, wherein the high data rate signal is modulated by the IF modem (3) that is controlled by a clock rate (24), each IF modem (3) generates one band limited signal at some IF frequency, **characterized by** the following steps:

- in transmitting direction:
- de-multiplexing one transmitting high speed signal into subsignals (29);
- providing every subsignal (29) to one IF modem (3);
- modulating the subsignal (29);
- up-converting the subsignal (29) to an intermediate frequency;
- combining the up-converted subsignals (29) of every IF modem (3) and forming a frequency multiplexed in-phase signal (21) and a frequency multiplexed quadrature signal (22) ;
- up-converting the in-phase signal (21) and the quadrature signal (22) to radio frequency;

- in receiving direction:
- down-converting the receiving signal to baseband;
- forming in-phase signal (21) and a quadrature signal (22);
- splitting the in-phase signal (21) and the quadrature signal (22) in in-phase subsignals (29) and in quadrature subsignals (29);
- presenting the subsignals (29) to the multiple IF modems (3) ;
- down-converting every in-phase and quadrature subsignal (29) by one IF modem (3) ;
- demodulating the subsignals (29); and
- multiplexing the demodulated subsignals (29) to one high speed signal (322),
wherein two channels of a two channel transceiver (13) of the IF modem (3) are modulating on the same IF frequency and a phase relationship between the two channels is fixed and known to the IF modem (3), and wherein
- in transmitting direction every subsignal (29) is transformed by a transformation module (27) over a transformation matrix to a sideband of the radio frequency fRF, particularly to fRF-fIF and/or fRF+fIF, respectively before it is modulated and directed to the two channel transceiver (13), wherein the transformation matrix has the

$$x_i^T(t) = \frac{1}{2}x_1(t) + \frac{1}{2}x_3(t)$$

$$x_q^T(t) = \frac{1}{2}x_2(t) - \frac{1}{2}x_4(t)$$

$$y_i^T(t) = \frac{1}{2}x_2(t) + \frac{1}{2}x_4(t)$$

form $$y_q^T(t) = \frac{1}{2}x_3(t) - \frac{1}{2}x_1(t)$$ , with $x_i^T, y_i^T$

are in-phase and , $x_q^T, y_q^T$ are quadrature output signals in transmit direction;
- in receiving direction after the received signal was down-converted and demodulated, using a two channel demodulator, by the IF modem (3) the subsignals (29) are transformed back by the transformation module (27) over a transformation matrix, wherein the transformation matrix

$$\tilde{x}_1(t) = \frac{1}{2}x_i^R(t) - \frac{1}{2}y_q^R(t)$$

$$\tilde{x}_2(t) = \frac{1}{2}x_q^R(t) - \frac{1}{2}y_i^R(t)$$

$$\tilde{x}_3(t) = \frac{1}{2}y_q^R(t) + \frac{1}{2}x_i^R(t)$$

$$\tilde{x}_4(t) = \frac{1}{2}y_i^R(t) - \frac{1}{2}x_q^R(t)$$

has the form

with $x_i^R, y_i^R$, are received in-phase and $x_q^R, y_q^R$ received quadrature signals and $\tilde{x}_{1(t)} ... \tilde{x}_{4(t)}$ are estimated output signals in receive direction.

6. The method according to claim 5, comprising that every IF modem (3) uses a different intermediate frequency forming an individual spectra.

7. The method according to claim 6, comprising that the individual spectra is provided with a bandwidth of at least 100 MHz.

8. The method according to one of the foregoing claim 5 to 7, comprising that the plurality of IF modems (3) generate a wide band signal by combining the individual spectra generated by each IF modem (3).

9. The method according to one of the foregoing claim 5 to 8, comprising that a digital compensation is done offline before and after transmission or reception, where compensation values are estimated.

10. The method according to one of the foregoing claim 5 to 9, comprising that a calibration of the transmitted and received signal is performed.

**Patentansprüche**

1. Vorrichtung für Kommunikation mit hoher Datenrate (36), umfassend

- mindestens einen Signaldemultiplexer (25) und einen Signalmultiplexer (26), wobei der Signaldemultiplexer (25) und der Signalmultiplexer (26) über Signalleitungen mit einem Modem verbunden sind;
- eine Referenzsteuereinheit;
- eine Antenne (1), wobei
- die Modemeinheit (2) eine Vielzahl von Zwischenfrequenz- bzw. IF-Modems (3) umfasst;
- Kombinierer (17) und Splitter (18), wobei die Kombinierer (17) und die Splitter (18) über Signalkanäle (19) mit der Vielzahl von IF-Modems (3) verbunden sind;
- und eine RF-Vorschalteinheit (20), wobei die Kombinierer (17) und die Splitter (18) über eine Gleichphasensignalleitung (21) und eine Quadratursignalleitung (22) mit der RF-Vorschalteinheit (20) verbunden sind, **dadurch gekennzeichnet, dass** das IF-Modem einen Zweikanalmodulator, einen Zweikanaldemodulator und einen Zweikanal-IF-Sender/Empfänger (13) mit einem festen Phasenverhältnis zwischen den zwei Kanälen umfasst und ein Transformationsmodul (27) jedem IF-Modem (3) vorangeht, wobei das IF-Modem und die RF-Vorschalteinheit (20) eine doppelte Umwandlungsarchitektur bilden.

2. Vorrichtung nach Anspruch 1, umfassend, dass die IF-Modems (3) eine Bank von Modulatoren und Demodulatoren bilden.

3. Vorrichtung nach einem der vorhergehenden Ansprüche, umfassend, dass die RF-Vorschalteinheit (20) einen Sender/Empfänger umfasst, der mit der Antenne (1) verbunden ist.

4. Vorrichtung nach einem der vorhergehenden Ansprüche, umfassend, dass eine Referenzsteuereinheit (23) mit den IF-Modems (3) und der RF-Vorschalteinheit (20) verbunden ist.

5. Verfahren zum Bereitstellen von Zwischenfrequenz- bzw. IF-Modems (3) einer Modemeinheit (2) mit einem Signal hoher Datenrate im GHz-Bereich, wobei das Signal hoher Datenrate durch das IF-Modem (3) moduliert wird, das durch eine Taktrate (24) gesteuert wird, jedes IF-Modem (3) ein bandbegrenztes Signal bei einer IF-Frequenz erzeugt, **gekennzeichnet durch** die folgenden Schritte:

- in Übertragungsrichtung:
- Demultiplexen eines Übertragungs-Hochgeschwindigkeitssignals in Teilsignale (29);
- Bereitstellen jedes Teilsignals (29) einem IF-Modem (3);
- Modulieren des Teilsignals (29);
- Aufwärtswandeln des Teilsignals (29) zu einer Zwischenfrequenz;
- Kombinieren der aufwärtsgewandelten Teilsignale (29) jedes IF-Modems (3) und Bilden eines frequenzgemultiplexten Gleichphasensignals (21) und eines frequenzgemultiplexten Quadratursignals (22);
- Aufwärtswandeln des Gleichphasensignals (21) und des Quadratursignals (22) zu Funkfrequenz;
- in Empfangsrichtung:
- Abwärtswandeln des empfangenen Signals zu Basisband;
- Bilden eines Gleichphasensignals (21) und eines Quadratursignals (22);
- Aufteilen des Gleichphasensignals (21) und des Quadratursignals (22) in Gleichphasenteilsignale (29) und in Quadraturteilsignale (29);
- Präsentieren der Teilsignale (29) den mehreren IF-Modems (3);
- Abwärtswandeln jedes Gleichphasen- und Quadraturteilsignals (29) durch ein IF-Modem (3);
- Demodulieren der Teilsignale (29); und
- Multiplexen der demodulierten Teilsignale (29) zu einem Hochgeschwindigkeitssignal (322),

wobei zwei Kanäle eines Zweikanal-Sender/Empfängers (13) des IF-Modems (3) auf derselben IF-Frequenz moduliert werden und ein Phasenverhältnis zwischen den zwei Kanälen fest und dem IF-Modem (3) bekannt ist, und wobei
- in Übertragungsrichtung jedes Teilsignal (29) durch ein Transformationsmodul (27) über eine Transformationsmatrix zu einem Seitenband der Funkfrequenz fRF transformiert wird, insbesondere zu fRF-fIF und/oder fRF+fIF, jeweils bevor es moduliert und zu dem Zweikanal-Sender/Empfänger (13) geleitet wird, wobei die Transformationsmatrix die Form

$$x_i^T(t) = \tfrac{1}{2}x_1(t) + \tfrac{1}{2}x_3(t)$$
$$x_q^T(t) = \tfrac{1}{2}x_2(t) - \tfrac{1}{2}x_4(t)$$
$$y_i^T(t) = \tfrac{1}{2}x_2(t) + \tfrac{1}{2}x_4(t)$$
$$y_q^T(t) = \tfrac{1}{2}x_3(t) - \tfrac{1}{2}x_1(t)$$

aufweist, wobei $x_i^T$, $y_i^T$ Gleichphasen- und $x_q^T$, $y_q^T$ Quadratur-Ausgangssignale in Übertragungsrichtung sind;
- in Empfangsrichtung, nachdem das empfangene Signal unter Verwendung eines Zweikanaldemodulators abwärtsgewandelt und demoduliert wurde, durch das IF-Modem (3) die Teilsignale (29) durch das Transformationsmodul (27) über eine Transformationsmatrix zurück transformiert werden, wobei die Transformationsmatrix die Form

$$\tilde{x}_1(t) = \tfrac{1}{2}x_i^R(t) - \tfrac{1}{2}y_q^R(t)$$
$$\tilde{x}_2(t) = \tfrac{1}{2}x_q^R(t) - \tfrac{1}{2}y_i^R(t)$$
$$\tilde{x}_3(t) = \tfrac{1}{2}y_q^R(t) + \tfrac{1}{2}x_i^R(t)$$
$$\tilde{x}_4(t) = \tfrac{1}{2}y_i^R(t) - \tfrac{1}{2}x_q^R(t)$$

aufweist, wobei $x_i^R$, $y_q^R$ empfangene Gleichphasen- und $x_q^R$, $y_q^R$ empfangene Quadratursignale sind und $\tilde{x}_1(t)...\tilde{x}_4(t)$ geschätzte Ausgangssignale in Empfangsrichtung sind.

6. Verfahren nach Anspruch 5, umfassend, dass jedes IF-Modem (3) eine verschiedene Zwischenfrequenz verwendet, die ein individuelles Spektrum bildet.

7. Verfahren nach Anspruch 6, umfassend, dass das individuelle Spektrum mit einer Bandbreite von mindestens 100 MHz bereitgestellt wird.

8. Verfahren nach einem der vorhergehenden Ansprüche 5 bis 7, umfassend, dass die Vielzahl von IF-Modems (3) ein Breitbandsignal durch Kombinieren der individuellen Spektren, die durch jedes IF-Modem (3) erzeugt werden, erzeugt.

9. Verfahren nach einem der vorhergehenden Ansprüche 5 bis 8, umfassend, dass eine digitale Kompensation offline vor oder nach Übertragung oder Empfang durchgeführt wird, wobei Kompensationswerte geschätzt werden.

10. Verfahren nach einem der vorhergehenden Ansprüche 5 bis 9, umfassend, dass eine Kalibrierung des übertragenen und empfangenen Signals durchgeführt wird.


**Revendications**

1. Appareil pour communication à haut débit de données (36), comprenant

   - au moins un démultiplexeur de signal (25) et un multiplexeur de signal (26), dans lequel le démultiplexeur de signal (25) et le multiplexeur de signal (26) sont connectés à une unité modem par l'intermédiaire de lignes de signal ;
   - une unité de commande de référence ;
   - une antenne (1), dans lequel
   - l'unité modem (2) comprend une pluralité de modems fréquence intermédiaire (IF) (3) ;
   - des combineurs (17) et des diviseurs (18), dans lequel les combineurs (17) et les diviseurs (18) sont connectés par l'intermédiaire de canaux de signal (19) à la pluralité de modems IF (3) ;
   - et une unité frontale RF (20), dans lequel les combineurs (17) et les diviseurs (18) sont connectés par l'intermédiaire d'une ligne de signal en phase (21) et d'une ligne de signal en quadrature (22) à l'unité frontale RF (20), **caractérisé en ce que**

   le modem IF comprend un modulateur à deux canaux, un démodulateur à deux canaux et un transmetteur-récepteur IF à deux canaux (13) avec une relation de phase fixe entre les deux canaux, et un module de transformation (27) précède chaque modem IF (3),
   dans lequel le modem IF et l'unité frontale RF (20) forment une architecture de conversion double.

2. Appareil selon la revendication 1, comprenant le fait que les modems IF (3) forment une banque de modulateurs et démodulateurs.

3. Appareil selon l'une des revendications précédentes, comprenant le fait que l'unité frontale RF (20) comprend un transmetteur-récepteur qui est connecté à l'antenne (1).

4. Appareil selon l'une des revendications précédentes, comprenant le fait qu'une unité de commande de référence (23) est connectée aux modems IF (3) et à l'unité frontale RF (20).

5. Procédé pour fournir à des modems fréquence intermédiaire (IF) (3) d'une unité modem (2) un signal à haut débit de données dans la gamme GHz, dans lequel le signal à haut débit de données est modulé par le modem IF (3) qui est commandé par une cadence d'horloge (24), chaque modem IF (3) génère un signal limité en bande à une certaine fréquence IF, **caractérisé par** les étapes suivantes :

   - dans la direction de transmission :
   - le démultiplexage d'un signal de transmission à grande vitesse en sous-signaux (29) ;
   - la fourniture de chaque sous-signal (29) à un modem IF (3) ;
   - la modulation du sous-signal (29) ;
   - la conversion ascendante du sous-signal (29) en une fréquence intermédiaire ;
   - la combinaison des sous-signaux, ayant subi une conversion ascendante, (29) de chaque modem IF (3) et la formation d'un signal en phase multiplexé en fréquence (21) et d'un signal en quadrature multiplexé en fréquence (22) ;
   - la conversion ascendante du signal en phase (21) et du signal en quadrature (22) en radiofréquence ;
   - dans la direction de réception :
   - la conversion descendante du signal de réception en bande de base ;
   - la formation d'un signal en phase (21) et d'un signal en quadrature (22) ;
   - la division du signal en phase (21) et du signal en quadrature (22) en sous-signaux en phase (29) et en sous-signaux en quadrature (29) ;
   - la présentation des sous-signaux (29) aux multiples modems IF (3) ;
   - la conversion descendante de chaque sous-signal en phase et en quadrature (29) par un modem IF (3) ;
   - la démodulation des sous-signaux (29) ; et
   - le multiplexage des sous-signaux démodulés (29) en un signal à grande vitesse (322),
   dans lequel deux canaux d'un transmetteur-récepteur à deux canaux (13) du modem IF (3) modulent sur la même fréquence IF et une relation de phase entre les deux canaux est fixée et connue par le modem IF (3), et dans lequel
   - dans la direction de transmission, chaque sous-signal (29) est transformé par un module de transformation (27), en utilisant une matrice de transformation, en une bande latérale de la radiofréquence fRF, particulièrement en fRF-fIF et/ou fRF+fIF, respectivement avant qu'il soit modulé et dirigé vers le transmetteur-récepteur à deux canaux (13), dans lequel la matrix de transformation a la forme

$$x_i^T(t) = \frac{1}{2}x_1(t) + \frac{1}{2}x_3(t)$$

$$x_q^T(t) = \frac{1}{2}x_2(t) - \frac{1}{2}x_4(t)$$

$$y_i^T(t) = \frac{1}{2}x_2(t) + \frac{1}{2}x_4(t)$$

$$y_q^T(t) = \frac{1}{2}x_3(t) - \frac{1}{2}x_1(t)$$

, $x_i^T$, $y_i^T$ sont des signaux de sortie en phase et $x_q^T$, $y_q^T$ sont des signaux de sortie en quadrature dans la direction de transmission ;

- dans la direction de réception, après que le signal reçu a subi une conversion descendante et a été démodulé, en utilisant un démodulateur à deux canaux, par le modem IF (3), les sous-signaux (29) sont retransformés par le module de transformation (27), en utilisant une matrice de transformation, dans lequel la matrice de transformation a la forme

$$\tilde{x}_1(t) = \frac{1}{2}x_i^R(t) - \frac{1}{2}y_q^R(t)$$

$$\tilde{x}_2(t) = \frac{1}{2}x_q^R(t) - \frac{1}{2}y_i^R(t)$$

$$\tilde{x}_3(t) = \frac{1}{2}y_q^R(t) + \frac{1}{2}x_i^R(t)$$

$$\tilde{x}_4(t) = \frac{1}{2}y_i^R(t) - \frac{1}{2}x_q^R(t)$$

, $x_i^R$, $y_i^R$, sont des signaux en phase reçus et $x_q^R$, $y_q^R$ sont des signaux en quadrature reçus et $\tilde{x}1(t)... \tilde{x}4(t)$ sont des signaux de sortie estimés dans la direction de réception.

6. Procédé selon la revendication 5, comprenant le fait que chaque modem IF (3) utilise une fréquence intermédiaire différente formant un spectre individuel.

7. Procédé selon la revendication 6, comprenant le fait que le spectre individuel est pourvu d'une largeur de bande d'au moins 100 MHz.

8. Procédé selon l'une des revendications précédentes 5 à 7, comprenant le fait que la pluralité de modems IF (3) génèrent un signal à bande large en combinant les spectres individuels générés par chaque modem IF (3).

9. Procédé selon l'une des revendications précédentes 5 à 8, comprenant le fait qu'une compensation numérique est réalisée hors ligne avant et après la transmission ou réception, où des valeurs de compensation sont estimées.

10. Procédé selon l'une des revendications précédentes 5 à 9, comprenant le fait qu'un calibrage du signal transmis et reçu est effectué.

# Fig. 1

# Fig. 2

# Fig. 3

Fig. 4a

EP 3 111 583 B1

Fig. 4b

## Fig. 5

312.5 Mbps →
312.5 Mbps →

312.5 Mbps ←
312.5 Mbps ←

Digital Modem

MIMO TRX — 13

→ 2 x 100 MHz

← 2 x 100 MHz

IF Modem

3

## Fig. 6

IF Modem — 3

100 MHz    100 MHz

IF Modem — 3

100 MHz    100 MHz

IF Modem — 3

100 MHz    100 MHz

Combined IF spectrum

## Fig. 7

Uplink    60 GHz    Downlink

3.3 GHz    3.3 GHz

DC Notch

3.3 GHz

Fig. 8

Dual channel transceiver

Channel 1 Tx
Channel 2 Tx
Channel 1 Rx
Channel 2 Rx

transceiver

EP 3 111 583 B1

## Fig. 9a

## Fig. 9b

## Fig. 9c

**EP 3 111 583 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0042727 A1